# EUROPÄISCHE PATENTSCHRIFT

(11) **EP 3 234 378 B1**
(45) Veröffentlichungstag und Bekanntmachung des Hinweises auf die Patenterteilung: **06.03.2019**
(21) Anmeldenummer: 15816438.4
(22) Anmeldetag: 17.12.2015
(51) Int. Cl.: F15B 21/04, F15B 13/08, B60T 17/04

(54) **DRUCKLUFTVERSORGUNGSEINRICHTUNG FÜR FAHRZEUG-DRUCKLUFTANLAGEN MIT WENIGSTENS EINEM GEHÄUSE AUS KUNSTSTOFF**
COMPRESSED AIR SUPPLY DEVICE FOR VEHICLE WITH AT LEAST ONE HOUSING MADE OF PLASTIC
DISPOSITIF D'ALIMENTATION EN AIR COMPRIMÉ POUR VÉHICULE AVEC AU MOINS UN BÂTIT EN PLASTIQUE

(30) Priorität: 19.12.2014 DE 102014019117
(43) Veröffentlichungstag der Anmeldung: 25.10.2017
(73) Patentinhaber: KNORR-BREMSE Systeme für Nutzfahrzeuge GmbH, 80809 München (DE)
(72) Erfinder: SCHNITTGER, Karsten, 80935 München (DE); KUHLEN, Christian, 85609 Aschheim (DE)
(86) Internationale Anmeldenummer: PCT/EP2015/080122
(87) Internationale Veröffentlichungsnummer: WO 2016/097075

(56) Entgegenhaltungen:
- DE-A1- 3 514 989
- DE-B3-102004 005 982
- DE-T2- 60 208 804
- FR-A1- 2 766 878
- FR-A1- 2 798 345

## Beschreibung

Die Erfindung geht aus von einer Druckluftversorgungseinrichtung für Fahrzeug-Druckluftanlagen, umfassend als Bauteile oder Baugruppen wenigstens eine Lufttrocknereinrichtung mit einer Lufttrocknerpatrone, eine Ventileinrichtung mit einem Mehrkreisschutzventil und gegebenenfalls weiteren Ventilen, einen Druckbegrenzer oder Druckregler, eine Steuer- und Regelelektronik sowie mehrere Gehäuse oder Gehäusebauteile, in welchen die vorgenannten Bauteile oder Baugruppen untergebracht sind, gemäß dem Oberbegriff von Anspruch 1.

Eine Druckluftversorgungseinrichtung ist beispielsweise aus DE 198 61 222 B4 bekannt. Dort sind in einem gemeinsamen Gehäuse aus Metall ein elektropneumatischer Druckregler, ein Vierkreisschutzventil, mehrere elektromechanische Drucksteuereinrichtungen, ein Drucksensor sowie eine Steuerelektronik angeordnet. An dem Gehäuse kann außerdem eine auswechselbare Lufttrocknerpatrone lösbar befestigt werden.

Eine modular aufgebaute Druckluftversorgungseinrichtung ist beispielsweise aus DE 10 2010 053 985 A1 bekannt. Dort verfügen ein Lufttrocknerteil sowie ein Prioritätsgerät jeweils über ein eigenes Gehäuse. Je modularer jedoch eine solche Druckluftversorgungseinrichtung aufgebaut ist, desto höher wird ihr Gewicht, was vor allem bei Kraftfahrzeugen eine Rolle spielt. Weiterhin ist der Fertigungsaufwand einer Reihe von Modulgehäusen relativ hoch, vor allem wenn diese aus Metall bestehen.

Eine gattungsgemäße Druckluftversorgungseinrichtung ist aus FR 2 798 345 A1 bekannt.

Der vorliegenden Erfindung liegt die Aufgabe zugrunde, eine Druckluftversorgungseinrichtung der eingangs erwähnten Art derart fortzubilden, dass sie einerseits kostengünstig herstellbar ist und andererseits eine hohe Funktionssicherheit aufweist.

Diese Aufgabe wird erfindungsgemäß durch die Merkmale von Anspruch 1 gelöst.

### Offenbarung der Erfindung

Die Erfindung geht davon aus, dass wenigstens ein Gehäuse oder Gehäusebauteil der mehreren Gehäuse oder Gehäusebauteile aus Kunststoff gefertigt ist.

Unter einem Gehäuse oder Gehäusebauteil soll im Sinne der Erfindung ein Bauteil oder eine Baugruppe verstanden werden, welches oder welche eine mit der Umgebung in Berührung kommende Außenfläche aufweist. Es muss sich dabei nicht zwangsläufig um ein schalenförmiges, zylindrisches, rechteckförmiges oder quaderförmiges Bauteil mit einem geschlossenen oder offenen Innenraum handeln. Vielmehr kommen dabei alle Gehäuse oder Gehäusebauteile in Betracht, darunter auch plattenförmige Gehäusebauteile, welche Bauteile, Baugruppen oder Anschlüsse der Druckluftversorgungseinrichtung beherbergen, tragen oder wenigstens teilweise ummanteln.

Vorzugsweise werden als Kunststoffe thermoplastische Kunststoffe, vorzugsweise semikristalline thermoplastische Kunststoffe für wenigstens ein Gehäuse oder Gehäusebauteil verwendet, beispielsweise mit relativ dünnwandiger Gehäusewand mit 2,5 mm Wandstärke, vorzugsweise mit oder ohne Glasfaserverstärkung. Diese Gehäuse oder Gehäusebauteile werden bevorzugt im Spritzgussverfahren hergestellt. Alternativ oder zusätzlich können auch Duroplaste verwendet werden, insbesondere für dickwandige Gehäuse oder Gehäusebauteile mit einer Wandstärke von mehr als 2,5 mm.

Durch die Verwendung von Kunststoff oder Kunststoffen für Gehäuse oder Gehäusebauteile von Druckluftversorgungseinrichtungen sinkt deren Gewicht in vorteilhafter Weise. Weiterhin können Gehäuseabschnitte wie beispielsweise Ventilsitze von Sitzventilen, die bei Metallgehäusen separate Bauteile darstellen und auch noch spanabhebend bearbeitet werden müssten, einstückig mit dem betreffenden Gehäuse oder Gehäusebauteil beispielsweise im Spritzgussverfahren hergestellt werden. Mithin können auf diese Weise beliebige Formen von Gehäusen hergestellt werden, die auch bereits einstückig mit dem Gehäuse ausgeführte Anformungen oder Ausformungen aufweisen, die ansonsten als separates Teil ausgeführt werden müssten.

Insbesondere werden bei der erfindungsgemäßen Druckluftversorgungseinrichtung Metallgehäuse oder Metallkomponenten nur dort eingesetzt, wo die typisch hohe Festigkeit und Steifigkeit eines Metalls (Zugfestigkeit > 200 N/mm²) vorteilhaft genutzt werden können, beispielsweise als Verbundwerkstoff eines Verbunds aus Metall- und Kunststoffgehäusen oder -gehäusebauteilen, bei dem Gehäuse oder Gehäusebauteile aus Kunststoff in Sandwichbauweise zwischen Gehäusen oder Gehäusebauteilen aus Metall gehalten werden und die Kraftübertragung und Krafteinleitung vom Verbund oder von der Sandwichbauweise in die Struktur des Kraftfahrzeugs beispielsweise ausschließlich durch die Gehäuse oder Gehäusebauteile aus Metall erfolgt.

Damit können in dem oder den von den Gehäusen oder Gehäusebauteilen aus Metall umfassten Gehäuse(n) oder Gehäusebauteile(n) Kunststoffe mit relativ geringer Festigkeit (Zugfestigkeiten < 200 N/mm², aber höhere Druckfestigkeit) genutzt werden, da dann ein großer Teil der Betriebs- und Gewichtskräfte von den Metallgehäusen oder Metallgehäusebauteilen aufgenommen wird.

Vorzugsweise werden auch Befestigungselemente oder Befestigungsvorrichtungen für die Befestigung der Lufttrocknerpatrone am Gehäuse der Lufttrocknereinrichtung wie etwa ein am Gehäuse der Lufttrocknereinrichtung angeordnetes Gewinde oder Gewindehülse für ein Gegengewinde am Patronenhals der Lufttrocknerpatrone oder am Gehäuse der Lufttrocknereinrichtung ausgebildete Bajonettverbindungselemente für eine Bajonettverbindung mit der Lufttrocknerpatrone aus Metall gefertigt. Bevorzugt wird das gesamte Gehäuse der Lufttrocknereinrichtung aus Metall, beispielsweise aus Aluminium hergestellt.

Weiterhin aus Metall können Befestigungsvorrichtungen der Druckluftversorgungseinrichtung wie Schraubaugen gefertigt werden, über welche die Druckluftversorgungseinrichtung beispielsweise am Fahrzeugrahmen befestigt wird.

Generell können auch Teile oder Baugruppen, welche mit Gewinden versehen sind, insbesondere aus Metall bzw. aus Aluminium bestehen. Insbesondere kann auch eine Anschlussplatte aus Metall, insbesondere aus Aluminium gefertigt sein, an welcher Druckluftanschlüsse für die zu den Druckluftverbraucherkreisen führenden pneumatischen Rohre oder Leitungen ausgebildet sind. Eine typische Verbindung zwischen einem solchen Rohr oder einer solchen Leitung besteht in einem sog. fitting, das dann ebenfalls aus Metall besteht. In der Druckluftversorgungseinrichtung verbaute Rohrleitungen können ebenfalls aus Metall bestehen.

Dort, wo Zugfestigkeiten von deutlich geringer als 200 N/mm² ausreichend sind, werden dagegen bevorzugt Kunststoffkomponenten eingesetzt wie beispielsweise bei der Luftführung von Druckluft innerhalb der Druckluftversorgungseinrichtung in Form von an oder in ein Kunststoffgehäuse oder Gehäusebauteil geformten Strömungskanälen und Strömungsnuten sowie bei der Lagerung von Ventilen der Druckluftversorgungseinrichtung.

Die Lufttrocknereinrichtung ist in einem eigenen ersten Gehäuse oder Gehäusebauteil untergebracht, welches aus wenigstens einem Metall, beispielsweise aus Aluminium als Aluminiumdruckgussteil gefertigt ist. Weiterhin ist an dem ersten Gehäuse oder Gehäusebauteil in vorteilhafter Weise eine Anschlussvorrichtung zum Anschluss der Lufttrocknerpatrone angeordnet ist, wobei die Anschlussvorrichtung aus einem Metall gefertigt ist. Darüber hinaus ist an dem ersten Gehäuse oder Gehäusebauteil bevorzugt eine Befestigungsvorrichtung zur Befestigung an dem Fahrzeug angeordnet ist, welche ebenfalls aus Metall besteht. Der Vorteil dieser Maßnahmen besteht darin, dass dann alle Bauteile oder Baugruppen wie die Anschlussvorrichtung zum Anschluss der Lufttrocknerpatrone und die Befestigungsvorrichtung zum Befestigen der Druckluftversorgungseinrichtung an dem Fahrzeug wegen höherer Festigkeits- und Steifigkeitsanforderungen gleich zusammen mit dem ersten Gehäuse der Lufttrocknereinrichtung aus Metall hergestellt werden.

Die Ventileinrichtung mit dem Mehrkreisschutzventil und den gegebenenfalls weiteren Ventilen ist demgegenüber in wenigstens einem zweiten Gehäuse oder Gehäusebauteil angeordnet, in welchem wenigstens auch die Steuer- und Regelelektronik sowie der Druckbegrenzer untergebracht sind, wobei das wenigstens eine zweite Gehäuse oder Gehäusebauteil aus Kunststoff gefertigt ist.

Dabei ist das wenigstens eine zweite Gehäuse oder Gehäusebauteil zwischen dem ersten Gehäuse und einem dritten Gehäuse oder Gehäusebauteil gehalten, welches aus wenigstens einem Metall gefertigt ist, wobei ein Verbund aus dem ersten Gehäuse oder Gehäusebauteil, dem wenigstens einen zweiten Gehäuse oder Gehäusebauteil und dem dritten Gehäuse oder Gehäusebauteil ausgebildet wird. Das wenigstens eine zweite Gehäuse oder Gehäusebauteil aus Kunststoff wird dann zwischen dem ersten Gehäuse oder Gehäusebauteil aus Metall und dem dritten Gehäuse oder Gehäusebauteil aus Metall dann quasi in einer Art Klemmung gehalten. In dieser Verbund- oder Sandwichbauweise ergeben sich keine hohen Anforderungen an die Zugfestigkeit des wenigstens einen zweiten Gehäuses oder Gehäusebauteils, weshalb dieses auch bevorzugt aus Kunststoff gefertigt wird.

Da außer an dem ersten Gehäuse oder Gehäusebauteil auch an dem dritten Gehäuse oder Gehäusebauteil eine Befestigungsvorrichtung aus Metall zur Befestigung der Druckluftversorgungseinrichtung an dem Fahrzeug angeordnet ist, wird das zweite Gehäuse oder Gehäusebauteil aus Kunststoff nicht direkt sondern hier beispielsweise ausschließlich über die Befestigungsvorrichtungen am ersten Gehäuse oder Gehäusebauteil und am dritten Gehäuse oder Gehäusebauteil an dem Fahrzeug oder Fahrzeugrahmen gehalten. Alternativ könnte die Befestigungsvorrichtung am ersten oder dritten Gehäuse oder Gehäusebauteil auch entfallen, wodurch die Druckluftversorgungseinrichtung dann alleine durch die Befestigungsvorrichtung des dritten bzw. ersten Gehäuses oder Gehäusebauteils am Fahrzeug oder Fahrzeugrahmen gehalten wird. In beiden Fällen weist das wenigstens eine zweite Gehäuse oder Gehäusebauteil keine solche Befestigungsvorrichtung auf, so dass es komplett aus Kunststoff gefertigt werden kann.

Die Verbund- oder Sandwichbauweise wird bevorzugt dadurch erzeugt, indem das wenigstens eine zweite Gehäuse oder Gehäusebauteil zwischen dem ersten Gehäuse oder Gehäusebauteil und dem zweiten Gehäuse oder Gehäusebauteil mittels einerseits in dem ersten Gehäuse oder Gehäusebauteil und andererseits in dem dritten Gehäuse oder Gehäusebauteil gekonterter Zuganker gehalten ist. Dann wird das zweite Gehäuse oder Gehäusebauteil hauptsächlich auf Druck belastet, was insofern von Vorteil ist, als die Druckfestigkeit von Kunststoffen höher als die Zugfestigkeit ist.

Das dritte, aus Metall bestehende Gehäuse oder Gehäusebauteil kann vorzugsweise plattenförmig ausgebildet sein und an seiner von dem wenigstens einen zweiten Gehäuse oder Gehäusebauteil weg weisenden Außenfläche Anschlüsse für Rohre oder Leitungen von Druckluftkreisen von Druckluftverbrauchern aufweisen. Da diese Anschlüsse einer gewissen Belastung und einem gewissen Verschleiß ausgesetzt sind, stellt ein metallischer Werkstoff einen geeigneten Werkstoff für diese Anschlüsse dar, die dann bestenfalls zusammen mit dem dritten Gehäuse z.B. als Aluminiumdruckgussteil gefertigt werden. Bedingt durch die bevorzugte Ausführung aus Aluminium hat das dritte Gehäuse oder Gehäusebauteil ein vorteilhaft geringes Gewicht.

In besonders zu bevorzugender Weise beinhaltet das wenigstens eine zweite Gehäuse oder Gehäusebauteil einen ersten Ventilblock der Ventileinrichtung, mit ersten Ventildomen, in welchen mit Ventilsitzen zusammen wirkende Ventilkörper von Sitzventilen beweglich geführt sind. Weiterhin beinhaltet das wenigstens eine zweite Gehäuse oder Gehäusebauteil einen zweiten Ventilblock der Ventileinrichtung, mit zweiten Ventildomen, an welchen die Ventilsitze der Sitzventile der Ventile der Ventileinrichtung vorzugsweise einstückig ausgebildet sind. Dabei sind die ersten Ventildome und die zweiten Ventildome relativ zueinander derart positioniert, dass die ersten Ventildome und die zweiten Ventildome axial wenigstens teilweise ineinander ragen und die einander zugeordneten Ventilsitze und Ventilkörper miteinander fluchten. Dann sind der erste Ventilblock und der zweite Ventilblock im montierten Zustand quasi zusammengesteckt, wobei beim Zusammenfügen der beiden Ventilblöcke die Ventilkörper gegenüber den zugeordneten Ventilsitzen automatisch positioniert werden. Zur Zentrierung der beiden Ventilblöcke werden beispielsweise Zentrierflächen oder Zentrierstifte vorgesehen. Die Ventilblöcke weisen dabei beispielsweise Umfangsflächen auf, die mit der Umgebung in Kontakt stehen und bilden daher selbst das zweite Gehäuses oder Gehäusebauteil oder einen Teil davon aus. Die mit diesen Maßnahmen erzielbaren Vorteile liegen insbesondere darin, dass im Wesentlichen nur zwei Spritzgusskörper aus Kunststoff mit bei einem Spritzgusskörper beispielsweise bereits angeformten Ventilsitzen und bedarfsweise eingespritzten Magnetspulen gefertigt werden müssen und nach Einfügen der Ventilkörper sowie Ventilkörperfedern eine Anzahl von (Magnet-)Ventilen bereits fertig gestellt ist.

Bevorzugt weist der erste Ventilblock erste Öffnungen oder Strömungskanäle und der zweite Ventilblock zweite Öffnungen oder Strömungskanäle auf, beispielsweise um (Magnet-)Ventile mit Druckluft zu versorgen, Strömungsverbindungen unter (Magnet-) Ventilen verschiedener Ventilblöcke sowie zu Anschlüssen zu schaffen. Im montierten Zustand der beiden Ventilblöcke fluchten dabei die ersten Öffnungen oder Strömungskanäle und die zweiten Öffnungen oder Strömungskanäle zum Zustandekommen einer Strömungsverbindung miteinander.

Vorzugsweise weisen wenigstens einige der Gehäuse oder Gehäusebauteile beispielsweise an zueinander weisenden Oberflächen Öffnungen oder Strömungskanäle auf, wobei die Öffnungen oder Strömungskanäle aneinander angrenzender Gehäuse oder Gehäusebauteile zum Zustandekommen einer Strömungsverbindung miteinander fluchten.

Dabei ist insbesondere vorgesehen, dass wenigstens einigen der aneinander angrenzenden Gehäuse oder Gehäusebauteile wenigstens eine Formdichtung mit wenigstens einem Verschlussteil dichtend zwischengeordnet ist, welches wenigstens eine der Öffnungen oder Strömungskanäle dichtend verschließt.

Dabei kann die Formdichtung wenigstens einen vom Verschlussteil abweichenden Dichtungsteil aufweisen, welcher in wenigstens einer an der Oberfläche wenigstens eines Gehäuses oder Gehäusebauteils ausgebildeten Nut gelagert ist.

Insbesondere dichtet der Dichtungsteil an aneinander angrenzenden Gehäusen oder Gehäusebauteilen ausgebildete Öffnungen, Strömungskanäle oder Strömungsnuten gegeneinander und/oder gegenüber der Umgebung ab.

Gemäß einer Weiterbildung sind die Formdichtung sowie das wenigstens eine Gehäuse oder Gehäusebauteil derart ausgebildet, dass abhängig von der Einbau- oder Drehlage derselben Formdichtung eine jeweils andere Öffnung oder ein jeweils anderer Strömungskanal durch das Verschlussteil verschlossen wird.

Dies ist beispielsweise dann der Fall, wenn der Verschlussteil z.B. über einen Steg mit dem Dichtungsteil verbunden ist und die Formdichtung in Bezug zu einer zur Ebene des Dichtungsteils senkrechten Achse dann beliebig verdreht werden kann, wobei je nach Drehlage der Formdichtung der Verschlussteil sich dann an einer jeweils anderen Stelle in Bezug zum betreffenden Gehäuse oder Gehäusebauteile befindet, um eine dort ausgebildete Öffnung zu verschließen.

Abhängig von der Lage des Verschlussteils wird dann eine Möglichkeit geschaffen, mittels einer jeweils anders gestalteten Formdichtung, die aus einer Gruppe unterschiedlicher Formdichtungen stammt, oder einer veränderten Lage derselben Formdichtung eine jeweils andere Öffnung in einem Gehäuse oder Gehäusebauteil und damit einen bestimmten Strömungsweg zwischen zugeordneten Öffnungen in aneinander angrenzenden Gehäusen oder Gehäusebauteilen zu verschließen und dafür evtl. einen anderen Strömungsweg zu öffnen.

Damit können lediglich mittels Ersatz einer Formdichtung mit dem Verschlussteil in einer bestimmten Lage durch eine andere Formdichtung mit demgegenüber veränderter Lage des Verschlussteils oder durch einen Einbau derselben Formdichtung in einer veränderten Lage jeweils andere Strömungswege innerhalb der Druckluftversorgungseinrichtung geschaffen werden. Damit wird eine sehr kostengünstige Möglichkeit eröffnet, um lediglich durch Auswechseln einer oder mehrerer Formdichtungen oder durch eine Montage derselben Formdichtung in veränderter Lage eine jeweils andere pneumatische Verschaltung von pneumatischen oder elektropneumatischen Komponenten der Druckluftversorgungseinrichtung zu erzielen. Die ist insbesondere bei der Erzeugung von Varianten der Druckluftversorgungseinrichtung von Vorteil.

Der Dichtungsteil einer solchen Formdichtung ist beispielsweise bei der Herstellung z.B. als Elastomerdichtung einstückig mit dem wenigstens einen Verschlussteil ausgeführt. Der Dichtungsteil besteht beispielsweise in einer ringförmigen Struktur, die in Nuten an der Oberfläche wenigstens eines der aneinander angrenzenden Gehäuse oder Gehäusebauteile gelagert ist. Der beispielsweise kreisplattenförmige Verschlussteil kann dann durch eine beim Herstellen der Formdichtung z.B. durch Vulkanisation gebildeten Steg mit dem Dichtungsteil verbunden sein.

Auch kann das wenigstens eine zweite Gehäuse oder Gehäusebauteil eine Zwischenplatte umfassen, welche zwischen dem ersten Ventilblock oder dem zweiten Ventilblock und dem dritten Gehäuse oder Gehäusebauteil angeordnet ist und welche Öffnungen oder Strömungskanäle aufweist, welche Öffnungen oder Strömungskanäle in dem ersten Ventilblock oder in dem zweiten Ventilblock mit Öffnungen oder Strömungskanälen in dem dritten Gehäuse oder Gehäusebauteil miteinander verbindet, welche mit den Anschlüssen für die Druckluftkreise von Druckluftverbrauchern verbunden sind.

Die Erfindung betrifft auch eine Fahrzeug-Druckluftanlage wie eine pneumatische oder elektropneumatische Bremseinrichtung (Betriebsbremseinrichtung oder Feststellbremseinrichtung), Luftfederungseinrichtung oder pneumatische Türbetätigungseinrichtung, welche von einer Druckluftversorgungseinrichtung nach wenigstens einem der vorhergehenden Ansprüche druckluftversorgt wird. Weiterhin umfasst die Erfindung auch ein Fahrzeug mit einer solchen Fahrzeug-Druckluftanlage.

### Zeichnung

Die Erfindung wird nachstehend anhand von Ausführungsbeispielen unter Bezugnahme auf die beigefügte Zeichnung näher beschrieben. Es zeigt
- Fig.1: eine stark schematisierte Seitenansicht einer Druckluftversorgungseinrichtung gemäß einer bevorzugten Ausführungsform;
- Fig.2: eine Rückansicht der Druckluftversorgungseinrichtung von Fig.1;
- Fig.3: eine seitliche Explosionsdarstellung der Druckluftversorgungseinrichtung von Fig.1;

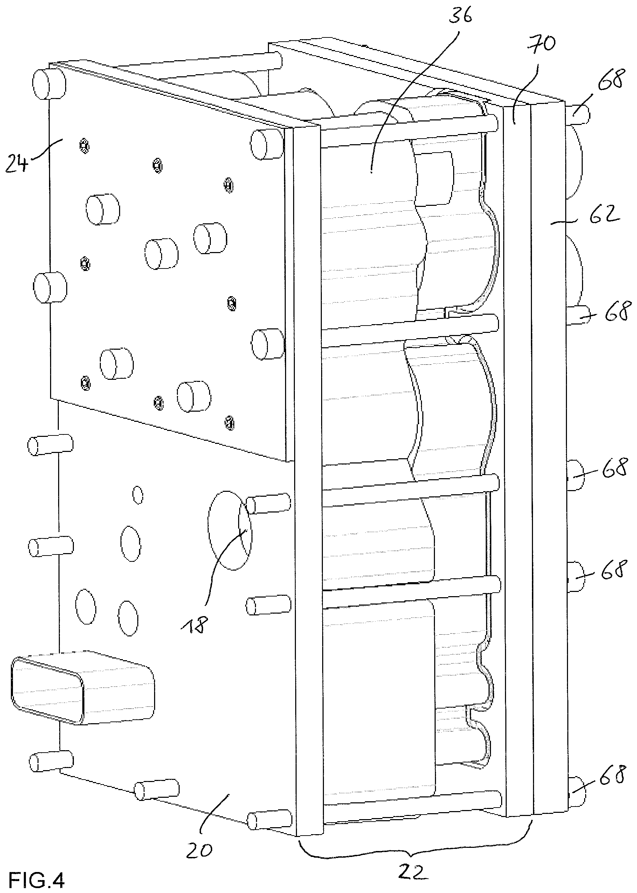

- Fig.4: eine perspektivische Ansicht eines mittleren Gehäuses der Druckluftversorgungseinrichtung von Fig.1;
- Fig.5: eine Querschnittsdarstellung eines Teils des mittleren Gehäuses der Druckluftversorgungseinrichtung von Fig.4;
- Fig.6a bis 6c: eine Draufsicht von zwischen Gehäusen oder Gehäusebauteilen der Druckluftversorgungseinrichtung angeordneten Formdichtungen gemäß einer ersten Variante;
- Fig.7: eine Querschnittsansicht einer Formdichtung von Fig.6a bis 6c;
- Fig.8: eine Draufsicht auf eine zwischen Gehäusen oder Gehäusebauteilen der Druckluftversorgungseinrichtung angeordneten Formdichtung gemäß einer zweiten Variante;
- Fig.8a bis 8c: eine Draufsicht auf die Formdichtung von Fig.8 in verschiedenen montierten Drehlagen.

### Beschreibung der Ausführungsbeispiele

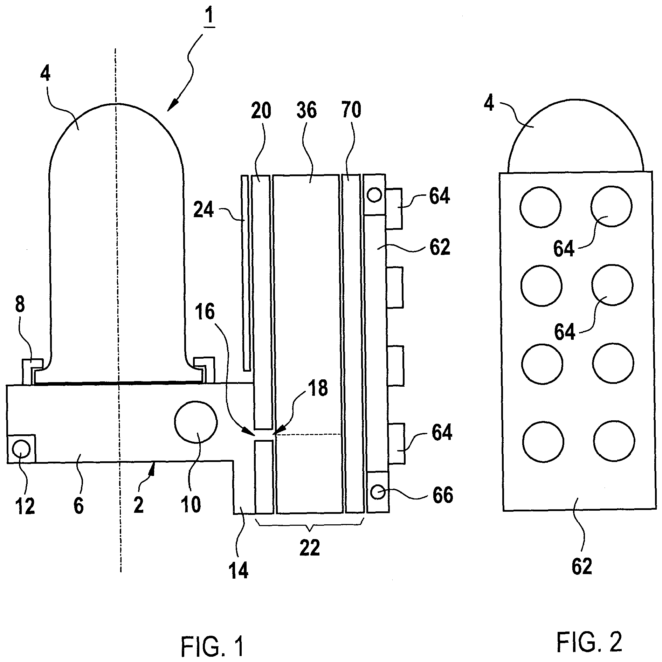

Die in Fig.1 gezeigte Druckluftversorgungseinrichtung 1 ist auf einem Nutzfahrzeug angeordnet und dient zur Druckluftversorgung von Druckluftverbrauchern wie einer pneumatischen oder elektropneumatischen Betriebsbremseinrichtung, Feststellbremseinrichtung, Luftfederungseinrichtung und/oder Türbetätigungseinrichtung.

Die Druckluftversorgungseinrichtung 1 weist eine Lufttrocknereinrichtung 2 mit einer Lufttrocknerpatrone 4 auf, welche lös- und auswechselbar an einem ersten Gehäuse 6 befestigt ist, welches weitere Bauelemente der Lufttrocknereinrichtung 2 wie beispielsweise ein hier nicht sichtbares Rückschlagventil beherbergt.

Das erste Gehäuse 6 besteht beispielsweise aus Aluminium und ist im Druckgussverfahren hergestellt. Die Lufttrocknerpatrone oder -kartusche 4 ist mittels einer Befestigungsvorrichtung 8, beispielsweise einem Bajonettverschluss an dem ersten Gehäuse 6 lösbar befestigt. Die Bauteile des Bajonettverschlusses 8 bestehen ebenfalls aus Metall wie auch sämtliche Anschlüsse des ersten Gehäuses 6 wie etwa ein Anschluss 10 für einen Druckluft fördernden Kompressor. Der Anschluss 10 für den Kompressor besteht beispielsweise in einem mit dem ersten Gehäuse 6 einstückig urgeformten Rohrstutzen, in dessen Öffnung ein Innengewinde für ein korrespondierendes Außengewinde eines fittings einer Kompressorleitung ausgebildet ist. An dem ersten Gehäuse 6 ist weiterhin eine Befestigungsvorrichtung 12 zur Befestigung der Druckluftversorgungseinrichtung 1 an einem Rahmen des Nutzfahrzeugs ausgebildet, beispielsweise in Form eines oder mehrerer Schraubaugen. Die Funktionsweise einer solchen Lufttrocknereinrichtung 2 ist hinlänglich bekannt und soll deshalb hier nicht weiter erläutert werden. Weiterhin ist vorzugsweise auch ein Druckbegrenzer oder Druckregler in dem ersten Gehäuse 6 angeordnet, welcher den Druck in den nachgeordneten Druckluftbehältern oder Druckkreisen regelt.

Das erste Gehäuse 6 weist eine Anschlussplatte 14 auf, die beispielsweise mit diesem einstückig als Aluminiumdruckgussformling urgeformt worden ist und in welcher Anschlüsse in Form von wenigstens einer Strömungsöffnung 16 ausgebildet sind. Diese Strömungsöffnung 16 fluchtet mit einer korrespondierend Strömungsöffnung 18 eines ersten Ventilblocks 20 als Gehäusebauteil eines zweiten Gehäuses 22, welches zumindest mit der Anschlussplatte 14 des ersten Gehäuses 6 verbunden ist, wobei auf diese Verbindung noch später eingegangen wird. Durch die miteinander kommunizierenden Strömungsöffnungen 16, 18 gelangt die vom Kompressor gelieferte, in der Lufttrocknereinrichtung 2 getrocknete Druckluft in den ersten Ventilblock 20 bzw. in das zweite Gehäuse 22. Eine zusätzliche, beispielsweise mit der Anschlussplatte 14 koplanare Stehplatte 24 kann die Verbindung zwischen dem ersten Gehäuse 6 und weiteren Gehäusen wie dem zweiten Gehäuse 22 verfestigen bzw. versteifen. Die Stehplatte 24 ist dabei ebenfalls aus Metall, z.B. aus Stahl gefertigt.

Der erste Ventilblock 20, der bevorzugt ein Spritzgussteil aus Kunststoff darstellt, bildet ein Gehäusebauteil mehrerer Gehäusebauteile, welche zusammen das zweite Gehäuse 22 bilden. Dieser erste Ventilblock 20 ist genauer ein Teil einer in dem zweiten Gehäuse 22 unterbrachten Ventileinrichtung 26, die unter anderem ein Mehrkreisschutzventil, insbesondere ein Vierkreisschutzventil und weitere Ventile wie etwa Magnetventile, Relaisventile und Wechselventile beinhaltet. Mittels des Mehrkreisschutzventils bzw. der Überströmventile wird eine Kreistrennung der an die Druckluftversorgungseinrichtung 1 angeschlossenen Druckluftverbraucherkreise wie Betriebsbremskreis I, Betriebsbremskreis II, Feststellbremskreis, Nebenverbraucherkreis realisiert. Nicht zuletzt können in dem zweiten Gehäuse 22 auch die elektronische Steuerung und die (Magnet-)Ventile einer elektropneumatischen Feststellbremseinrichtung und/oder einer elektropneumatischen Luftfederungseinrichtung des Nutzfahrzeugs untergebracht sein.

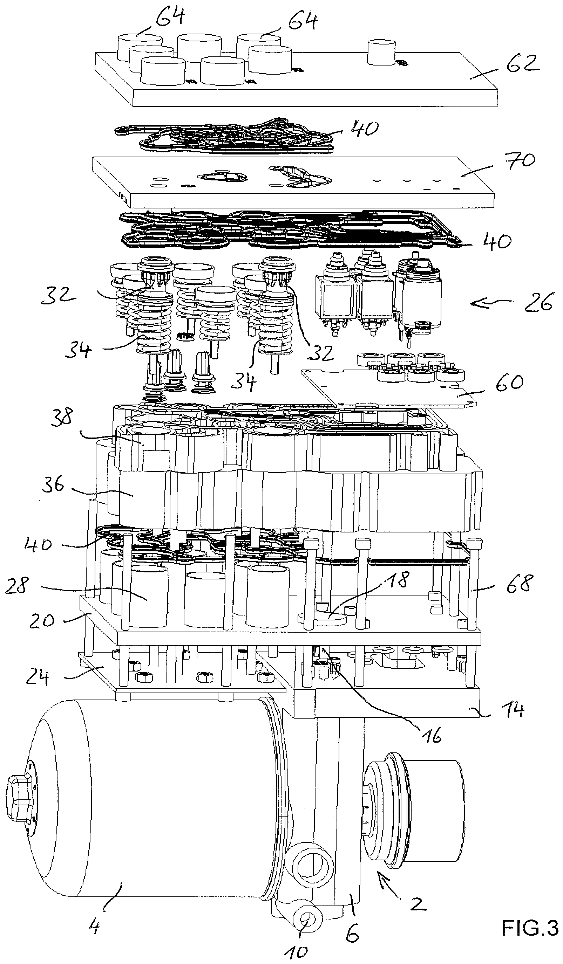

Der erste Ventilblock 20 weist beispielsweise erste Ventildome 28 auf, in welchen mit Ventilsitzen 30 zusammen wirkende Ventilkörper 32 von Sitzventilen der Ventileinrichtung 26 beweglich geführt sind. Die Ventilkörper 32 sind anhand der Explosionsdarstellung von Fig.3 einzeln erkennbar und durch Druckfedern 34 in Schließ- oder Öffnungsrichtung des betreffenden Sitzventils vorgespannt. Der Ventilblock 20 kann aber auch ohne Ventildome 28 ausgeführt sein.

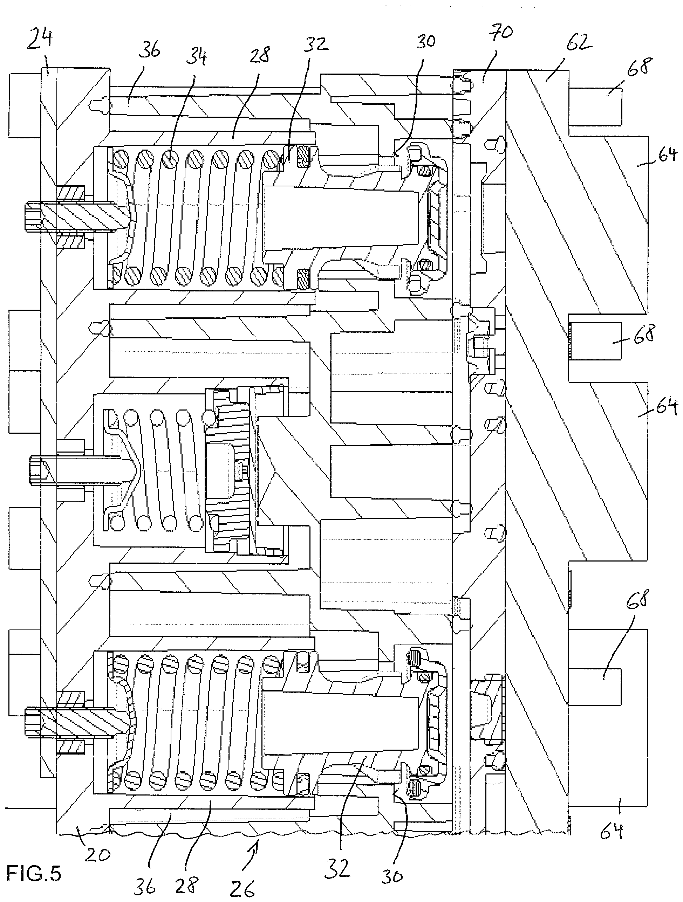

Das zweite Gehäuse 22 weist als weiteres Gehäusebauteil einen zweiten Ventilblock 36 der Ventileinrichtung 26 auf, mit zweiten Ventildomen 38, an welchen die Ventilsitze 30 der Sitzventile der Ventileinrichtung 26 vorzugsweise einstückig ausgebildet sind, wie insbesondere aus Fig.5 hervorgeht. Bei vom Ventilsitz 30 abgehobenem Ventilkörper 32 befindet sich das betreffende Sitzventil in Öffnungsstellung und bei gegen den Ventilsitz 30 gedrängtem Ventilkörper 32 in Schließstellung. Im vorliegenden Fall handelt es sich beispielsweise um ein Druckbegrenzungsventil, welches pneumatisch betätigt wird. Denkbar ist aber auch, dass die Öffnungs- bzw. Schließstellung wenigstens eines der dortigen Sitzventile magnetisch, d.h. mittels Be- oder Entstromung einer oder mehrerer Magnetspulen erfolgt.

Der zweite Ventilblock 36 stellt dabei bevorzugt ebenfalls ein Spritzgussteil aus Kunststoff dar. Weiterhin stellen der erste Ventilblock 20 und der zweite Ventilblock 36 separate Gehäusebauteile des zweiten Gehäuses 22 dar, als zumindest Abschnitte ihrer Umfangsflächen mit der Umgebung in Kontakt treten und sie Bauteile wie z.B. die Ventilkörper 32 in ihrem Inneren beherbergen.

Die ersten Ventildome 28 und die zweiten Ventildome 38 werden bei der Montage relativ zueinander derart positioniert, dass sie wenigstens teilweise axial ineinander ragen und die einander zugeordneten Ventilsitze 30 und Ventilkörper 32 miteinander fluchten. Hierzu sind entsprechende Zentriermaßnahmen vorgesehen. Dies veranschaulichen insbesondere Fig.3 und Fig.5.

Wie aus Fig.3 hervorgeht, sind einigen der Ventilblöcke oder Gehäusen oder Gehäusebauteilen der Druckluftversorgungseinrichtung 1 Formdichtungen 40 zwischengeordnet. Als Beispiel wird im Folgenden eine Formdichtung 40 zwischen dem ersten Ventilblock 20 und dem zweiten Ventilblock 36 betrachtet, die beispielsweise als eine elastische, einstückige und aus einem Elastomer bestehende Formdichtung 40 ausgeführt ist.

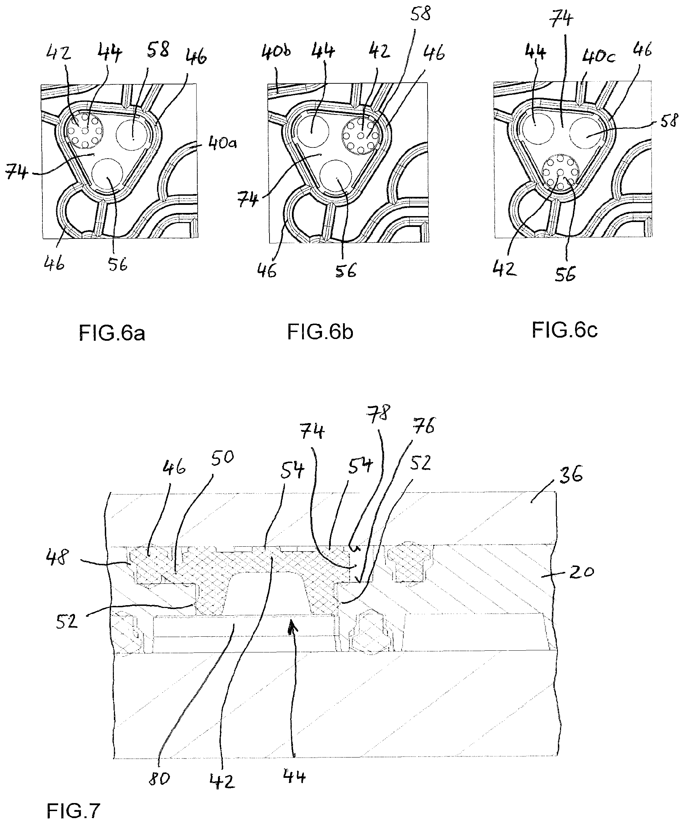

In Fig.6a bis Fig.6c sind verschiedene Ausführungen 40a, 40b und 40c einer ersten Variante von Formdichtungen 40 gezeigt. Die hier beispielhaft gezeigten Formdichtungen 40a bis 40c weisen jeweils einen ringförmig umlaufenden Ringteil 46 auf, wobei hier beispielsweise nur ein Verschlussteil 42 innerhalb des Ringteils 46 angeordnet ist. Ringteil 46 und Verschlussteil sind beispielsweise durch einen Steg 50 miteinander verbunden, wobei Ringteil 46, Verschlussteil 42 und Steg vorzugsweise als elastisches und einstückig ausgeführtes Elastomerteil ausgebildet sind. Der Verschlussteil 42 ist innerhalb des umlaufenden Ringteils 46 angeordnet und weist ausgehend von diesem nach innen.

Der Ringteil 46 umschließt oder umgibt eine von Druckmittel durchströmte Kammer 74, welche nicht ausschließlich von dem Verschlussteil 42 ausgefüllt wird, d.h. heißt, die Kammer 74 weist eine lichte Weite auf. Diese Kammer 74 ist außer durch den Ringteil 46 weiterhin durch eine erste Fläche 76 des hier beispielsweise ersten Ventilblocks 20 und durch eine zweite Fläche 78 des hier beispielsweise zweiten Ventilblocks 36 begrenzt ist, wie insbesondere Fig.7 veranschaulicht.

Der Verschlussteil 42 ist insbesondere kreisplattenförmig oder pfropfenartig und verschließt bei der Formdichtung 40a von Fig.6a beispielsweise im in den ersten Ventilblock 20 eingebauten Zustand der Formdichtung 40 beispielsweise eine erste, in der ersten Fläche 76 im ersten Ventilblock 20 ausgebildete Strömungsöffnung 44 dichtend. Hierzu ist der Außendurchmesser des Verschlussteils 42 bevorzugt etwas größer als der Innendurchmesser der durch den Verschlussteil 42 verschlossenen ersten Strömungsöffnung 44, damit im montierten Zustand ein gewisser Anpressdruck zwischen dem Verschlussteil 42 und der inneren Umfangsfläche der ersten Strömungsöffnung 44 vorhanden ist.

Weiterhin ist der Ringteil 46 beispielsweise in einer an der Oberfläche des ersten Ventilblocks 20 ausgebildeten ersten Nut 48 gehalten bzw. geführt (Fig.7). Durch eine in Bezug zur ersten Nut 48 fluchtende und parallel verlaufende zweite Nut (hier nicht gezeigt) im zweiten Ventilblock 36 kann der Ringteil 46 auch zwischen der ersten Nut 48 und der zweiten Nut fixiert sein, wie anhand der Figuren 6a bis 6c und 7 leicht vorstellbar ist. Denkbar ist auch eine Ausführungsform ohne eine solche bzw. ohne solche Nuten oder Vertiefungen, wobei dass der Ringteil 46 dann alleine durch die zwischen den beiden Ventilblöcken 20, 36 herrschende Pressung lagefixiert wird.

Der Steg 50 ist etwas länger als eigentlich notwendig, um im eingebauten Zustand der Formdichtung 40a einen gewissen Toleranzausgleich zu schaffen. Außerdem bildet der Steg 50 eine Verliersicherung für den Verschlussteil 42.

Wie aus Fig.7 hervorgeht, weist der Verschlussteil 42 an seiner zum zweiten Ventilblock 36 weisenden Oberfläche Noppen 54 auf, welche eine Abstützfläche für den zweiten Ventilblock 36 bildet. Daher erstreckt sich der Verschlussteil 42 bevorzugt von der ersten Strömungsöffnung 44 bis zur zweiten Fläche 78 des zweiten Ventilblocks 36 und liegt dort unter Vorspannung an, was zur Lagefixierung des Verschlussteils 42 in der Strömungsöffnung 44 sowie zur Erhöhung der Dichtigkeit beiträgt. Weiterhin kann der Verschlussteil 42 auch an seiner radial äußeren Umfangsfläche eine oder mehrere radial vorspringende und umlaufende Dichtlippen 52 aufweisen, welche sich in dem in der Strömungsöffnung montierten Zustand elastisch verformen. Eine entsprechend dem Rand der ersten Strömungsöffnung 44 ausgebildete radial vorspringende Stufe am Verschlussteil 42 wirkt außerdem als axiale Dichtung, wenn der Verschlussteil 42 durch den zweiten Ventilblock 36 gegen den Rand der ersten Strömungsöffnung 44 gepresst wird. Die Vorspannung der Ventilblöcke 20 und 36 gegeneinander wird von später noch beschriebenen Zugankern 68 aufgebracht.

Bei den in Fig.6b und 6c gezeigten Formdichtungen 40a bis 40c verschließt der Verschlussteil 42 eine jeweils andere Strömungsöffnung der hier drei Strömungsöffnungen 44, 56 und 58 in der ersten Fläche 76 im ersten Ventilblock 20, beispielsweise eine erste Strömungsöffnung 44, eine zweite Strömungsöffnung 56 oder eine dritte Strömungsöffnung 58.

Daher ist gemäß der ersten Variante eine Gruppe von Formdichtungen 40a, 40b, 40c mit jeweils unterschiedlicher Lage eines Verschlussteils 42 in Bezug zum Ringteil 46 vorgesehen ist, wobei abhängig von einer aus der Gruppe von Formdichtungen 40a, 40b, 40c ausgewählten, zwischen den beiden Ventilblöcken 20, 36 montierten Formdichtung 40a, 40b oder 40c jeweils wenigstens eine andere Strömungsöffnung 44, 56, 58 durch den Verschlussteil 42 der gerade ausgewählten Formdichtung 40a, 40b oder 40c verschlossen und damit jeweils eine andere Strömungsverbindung zwischen zwei Strömungsöffnungen 56 und 58 (Fig.6a) bzw. 44 und 56 (Fig.6b) bzw. 44 und 58 (Fig.6c) der drei Strömungsöffnungen 44, 56 und 58 innerhalb der Kammer 74 realisiert wird.

Bei der Formdichtung 40a von Fig.6a wird die erste Strömungsöffnung 44 vom verschlussteil 42 verschlossen, wobei dann aber weiterhin eine Strömungsverbindung zwischen der zweiten Strömungsöffnung 56 und der dritten Strömungsöffnung 58 vorhanden ist. Die Strömungsöffnungen 44, 56, 58 stellen hier beispielsweise Mündungen von Strömungskanälen dar, die in dem ersten Ventilblock 20 ausgebildet sind und senkrecht oder parallel zur Plattenebene verlaufen. In Fig.7 ist beispielhaft ein parallel zur Plattenebene verlaufender Strömungskanal 80 gezeigt, dessen Strömungsöffnung 44 hier aber durch den Verschlussteil 42 verschlossen ist.

In Fig.6a strömt beispielsweise Druckluft aus einem im ersten Ventilblock 20 ausgebildeten Strömungskanal über die zweite Strömungsöffnung 56 als Mündung in die Kammer 74 ein, wird dann wenigstens teilweise an der zweiten Fläche 78 des zweiten Ventilblocks reflektiert und wird dann über die dritte Strömungsöffnung 58 in den dieser zugeordneten Strömungskanal im ersten Ventilblock 20 abgeführt. Die Kammer 74 wird daher dabei durchströmt. Bei den Formdichtungen 40b und 40c werden dann in analoger Weise jeweils andere Strömungsverbindungen zwischen hier beispielsweise jeweils zwei Strömungsöffnungen 44 und 56 bzw. 44 und 58 geschaffen.

Anstatt hier nur drei Strömungsöffnungen 44, 56 und 58 könnten in der ersten Fläche 76 des ersten Ventilblocks 20 auch mehr als drei Strömungsöffnungen ausgebildet sein, welche mit der Kammer 74 in Strömungsverbindung stehen. Weiterhin kann eine Formdichtung 40a, 40b oder 40c auch mehrere Verschlussteile 42 aufweisen, um jeweils mehr als nur eine Strömungsöffnung zu sperren.

Durch Auswechseln der Formdichtung 40a in Fig.6a durch eine andere Formdichtung 40b bzw. 40c mit jeweils anderer Lage des Verschlussteils 42 oder der Verschlussteile in Bezug zum Ringteil 46 können daher unterschiedliche Strömungsverbindungen zwischen den Strömungsöffnungen 44, 56, 58 und deren zugeordneten Strömungskanälen im ersten Ventilblock 20 geschaffen werden. Der zweite Ventilblock 36 weist im Bereich der Kammer 74 bevorzugt keine Strömungsöffnung auf, kann dort aber mit einer solchen ausgestattet sein, welche dann ebenfalls eine Mündung eines im zweiten Ventilblocks ausgebildeten Strömungskanals ist. Eine solche Ausführung erweitert die Anzahl von möglichen Strömungsverbindungen zwischen Strömungskanälen.

Die Strömungsöffnungen 44, 56 und 58 im Ventilblock 20 weisen bevorzugt einen identischen Innendurchmesser auf. Auch der Verschlussteil 42 der Formdichtungen 40a, 40b und 40c weist bevorzugt jeweils denselben Außendurchmesser auf.

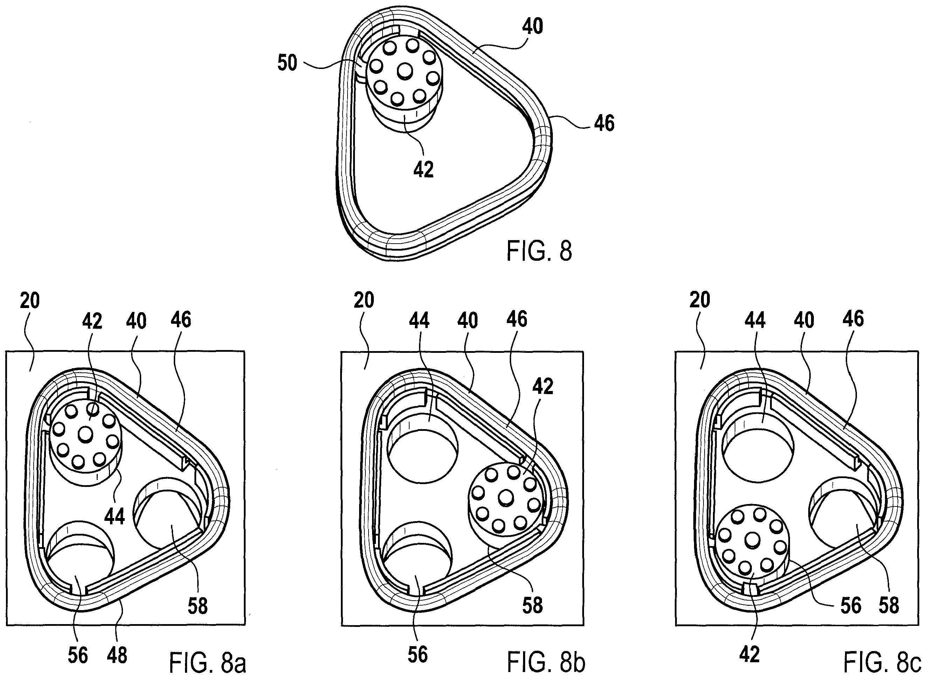

Gemäß einer in Fig.8 und Figuren 8a bis 8c gezeigten Variante werden unterschiedliche Strömungsverbindungen zwischen den Strömungsöffnungen 44, 56 und 58 durch eine jeweils andere Montageposition ein- und derselben Formdichtung 40 erzeugt. Dabei ist die Formdichtung 40 beispielsweise in Bezug zu einer gedachten Drehachse senkrecht zur Ebene der Ventilblöcke 20, 36 jeweils nur in einer anderen Drehlage eingebaut, wobei sich der hier dann beispielsweise dreieckförmige Ringteil 46 jeweils elastisch anpasst, jedoch die Formdichtung 40 ansonsten nicht verändert wird. Daher ist abhängig von der Montageposition der Formdichtung 40 eine jeweils andere Strömungsöffnung 44 oder 56 oder 58 im ersten Ventilblock 20 geöffnet bzw. verschlossen, so dass mit Hilfe ein- und derselben Formdichtung 40 unterschiedliche Strömungsverbindungen im ersten Ventilblock 20 geöffnet bzw. verschlossen und damit unterschiedliche pneumatische Schaltungen gebildet werden können.

In der Drehlage von Fig.8a verschließt der Verschlussteil 42 der Formdichtung 40 beispielsweise die erste Strömungsöffnung 44, in einer weiteren Drehlage gemäß Fig.8b die dritte Strömungsöffnung 58 und in einer wiederum weiteren Drehlage die zweite Strömungsöffnung.

Wie bei der Variante gemäß Figuren 6a bis 6c und Fig.7 kann auch bei der Variante gemäß Figuren 8a bis 8c der Ringteil 46 der Formdichtung 40 in einer an der Oberfläche des ersten Ventilblocks 20 ausgebildeten ersten Nut gehalten bzw. geführt sein. Durch eine in Bezug zur ersten Nut fluchtende und parallel verlaufende zweite Nut (hier nicht gezeigt) im zweiten Ventilblock 36 kann der Ringteil 46 auch zwischen der ersten Nut und der zweiten Nut fixiert sein. Auch eine Ausführung ohne Nut ist denkbar.

Die Ausbildung des Verschlussteils 42 bzw. dessen Lagerung in den Strömungsöffnungen 44, 56 und 58 und Fixierung zwischen den Ventilblöcken 20 und 36 ist bevorzugt wie bei der ersten Variante und wie in Fig.7 dargestellt ausgeführt.

Wie am besten anhand von Fig.3 sichtbar, ist in dem zweiten Gehäuse 22 auch eine Steuer- und Regelelektronik 60 angeordnet, welche über implementierte Steuer- und Regelsoftware vorzugsweise sämtliche Funktionen der Druckluftversorgungseinrichtung1 steuert bzw. regelt, unter anderem auch die Feststellbremsfunktion und/oder die Luftfederungsfunktion, wie oben bereist erwähnt. Eine die Steuer- und Regelelektronik 60 umfassende Platine ist dabei beispielsweise auf der vom ersten Ventilblock 20 weg weisenden Seitenfläche des zweiten Ventilblocks 36 befestigt.

Das zweite Gehäuse 22 bzw. unter anderem der erste Ventilblock 20 und der zweite Ventilblock 36 sind zwischen dem ersten Gehäuse 6 und einem dritten Gehäuse 62 gehalten, welches bevorzugt ebenfalls ein Aluminiumdruckgussteil darstellt, wobei ein Verbund aus dem ersten Gehäuse 6, dem zweiten Gehäuse 22 und dem dritten Gehäuse 62 ausgebildet wird. Das dritte Gehäuse 62 ist bevorzugt plattenförmig, wobei an dessen von dem zweiten Gehäuse 22 weg weisenden Fläche Anschlüsse 64 für Rohre und/oder Leitungen der Druckluftverbraucherkreise ausgebildet sind, wie insbesondere aus Fig.2 und Fig.3 hervorgeht.

Diese Anschlüsse 64 bestehen beispielsweise in mit dem dritten Gehäuse 62 einstückig urgeformten Rohrstutzen, in deren Öffnungen Innengewinde für korrespondierende Außengewinde von fittings der angeschlossenen Rohre und Leitungen ausgebildet sind. An dem dritten Gehäuse 62 ist weiterhin eine Befestigungsvorrichtung 66 zur Befestigung der Druckluftversorgungseinrichtung 1 an dem Rahmen des Nutzfahrzeugs ausgebildet, beispielsweise in Form eines oder mehrerer Schraubaugen. Folglich wird das hier beschriebene bevorzugte Ausführungsbeispiel einer Druckluftversorgungseinrichtung 1 bevorzugt lediglich an dem ersten Gehäuse 6 und an dem dritten Gehäuse 62 mittels entsprechender Befestigungsvorrichtungen 12, 66 am Rahmen des Nutzfahrzeugs gehalten, während des zweite Gehäuse 22 keine solche Befestigungseinrichtung aufweist. Alternativ könnte die Druckluftversorgungseinrichtung 1 auch lediglich über die Befestigungsvorrichtung 12 am ersten Gehäuse 6 oder die Befestigungsvorrichtung 66 am dritten Gehäuse 62 gehalten sein, wobei sich dann eine auskragende Lage ergibt.

Wie insbesondere Fig.3 veranschaulicht, wird das zweite Gehäuse 22 zwischen dem ersten Gehäuse 6 und dem dritten Gehäuse 62 mittels einerseits in dem ersten Gehäuse 6 und andererseits in dem dritten Gehäuse 62 gekonterter Zuganker 68 gehalten. Da sich die beiden Ventilblöcke 20, 36 und das dritte Gehäuse 62 in Bezug auf die Ebene der Anschlussplatte 14 des ersten Gehäuses 6 über diese Anschlussplatte 14 seitlich hinaus erstrecken, sind die Zuganker 68 auch in der Stehplatte 24 verankert. Die Anschlussplatte 14, die beiden Ventilblöcke 20, 36 sowie das plattenförmige dritte Gehäuse 62 sind weiterhin bevorzugt parallel angeordnet, was eine kompakte Bauform bedingt.

Wie insbesondere Fig.3 zeigt, umfasst das zweite Gehäuse 22 zusätzlich eine Zwischenplatte 70, welche zwischen dem zweiten Ventilblock 36 und dem dritten Gehäuse 62 angeordnet ist und welche Öffnungen oder Strömungskanäle aufweist, welche Öffnungen oder Strömungskanäle in dem zweiten Ventilblock 36 mit Öffnungen oder Strömungskanälen in dem dritten Gehäuse 62 miteinander verbindet, welche mit den Anschlüssen 64 für die Druckluftkreise der Druckluftverbraucher verbunden sind. Die Zwischenplatte 70, welche ebenfalls einen Spritzgussformling aus Kunststoff darstellt und parallel zu der Anschlussplatte 14, den beiden Ventilblöcken und dem plattenförmigen dritten Gehäuse angeordnet ist, lagert bzw. kontert zum einen Bauteile wenigstens einiger Ventile der Ventileinrichtung 26, welche durch Öffnungen der zweiten Ventildome 38 im zweiten Ventilblock 36 hindurchragen. Bei diesen Bauteilen handelt es sich beispielsweise um Ventilsitze, die dann in der Zwischenplatte 70 einstückig ausgebildet und mit dieser urgeformt sind.

Zum andern stellt die Zwischenplatte 70 Strömungswege und Strömungskanäle zwischen Ventilen der Ventileinrichtung 26 und den Anschlüssen 64 für die Druckluftverbraucherkreise her. Insbesondere können auf ihren einerseits dem zweiten Ventilblock 36 zugewandten Oberfläche und andererseits dem dritten Gehäuse 62 zugewandten Oberfläche nutenförmige Strömungswege und in Ihrem Inneren diese Strömungswege miteinander verbindende Strömungskanäle ausgebildet sein. Diese Strömungswege bzw. Strömungskanäle sind bevorzugt zusammen mit der Zwischenplatte 70 im Spritzgussverfahren einstückig urgeformt.

Wie bereits zwischen den Ventilblöcken sind auch einerseits dem zweiten Ventilblock 36 und der Zwischenplatte 70 und der Zwischenplatte 70 und dem dritten Gehäuse 62 ebenfalls Formdichtungen 40 dichtend zwischengeordnet, welche mit ihren Verschlussteilen 42 wenigstens eine Öffnung oder einen Strömungskanal der Zwischenplatte 70 dichtend verschließen. Die Dichtungsteile 46 der Formdichtungen 40 sind wiederum ebenfalls in Nuten im zweiten Ventilblock 36, in der Zwischenplatte 72 sowie in dem dritten Gehäuse 62 geführt und fixiert. Dann werden je nach Lage oder Ausführung der betreffenden Formdichtung 40 bestimmte Strömungswege verschlossen oder freigegeben.

Das zweite Gehäuse 22 umfasst hier daher die beiden Ventilblöcke 20, 36 sowie die Zwischenplatte 70 wie auch die Formdichtungen 40, wobei bevorzugt alle diese Ge-Bauteile aus Kunststoff bzw. aus Elastomer gefertigt sind. Vorzugsweise werden als Kunststoffe thermoplastische Kunststoffe, vorzugsweise semikristalline thermoplastische Kunststoffe verwendet, beispielsweise relativ dünnwandig mit bis zu 2,5 mm Wandstärke, vorzugsweise mit oder ohne Glasfaserverstärkung. Diese Teile 20, 36, 70 werden bevorzugt im Spritzgussverfahren hergestellt. Alternativ oder zusätzlich können auch Duroplaste verwendet werden, insbesondere, um dickwandige Teile 20, 36, 70 mit einer Wandstärke von mehr als 2,5 mm zu erzeugen.

Das erste Gehäuse 6 und das dritte Gehäuse 62 bestehen demgegenüber aus Metall, vorzugsweise aus Aluminium, wobei an diesen Gehäusen 6, 62 Anschlüsse 10, 64 zumindest für den Kompressor und die Druckluftverbraucherkreise vorzugsweise einstückig urgeformt ausgebildet werden, weil die Anschlüsse 10, 64, die z.B. als Rohrstutzen mit Innengewinde ausgebildet sind, höhere Anforderungen an Festigkeit und Steifigkeit erfüllen müssen.

Weiterhin bestehen an dem ersten Gehäuse 6 und an dem dritten Gehäuse 62 auch die Befestigungsvorrichtungen 8, 68 zur Befestigung der Druckluftversorgungseinrichtung 1 am Rahmen des Nutzfahrzeugs aus Metall, weil auch an diese Befestigungsvorrichtungen höhere Steifigkeits- und Festigkeitsanforderungen gestellt werden.

Daher werden bei der Druckluftversorgungseinrichtung 1 Metallgehäuse oder Metallkomponenten nur dort eingesetzt, wo die typisch hohe Festigkeit und Steifigkeit von Metallen vorteilhaft genutzt werden kann, beispielsweise als Verbundwerkstoff eines Verbunds aus Metall- und Kunststoffgehäusen oder -gehäusebauteilen 20, 36, 70, bei dem das zweite Gehäuse 22 aus Kunststoffgehäusebauteilen in Sandwichbauweise zwischen den ersten Gehäuse 6 aus Metall und dem dritten Gehäuse 62 aus Metall gehalten wird und die Kraftübertragung und Krafteinleitung vom Verbund oder von der Sandwichbauweise in die Struktur des Kraftfahrzeugs beispielsweise ausschließlich durch die aus Metall bestehenden ersten Gehäuse 6 und dritten Gehäuse 62 erfolgt.

Damit können für das von dem ersten Gehäuse 6 und dem dritten Gehäuse 62 umfasste oder umgriffene zweite Gehäuse 22 bzw. für dessen Gehäusebauteile 20, 36 und 70 Kunststoffe mit relativ geringer Festigkeit (Zugfestigkeiten < 200 N/mm², aber höhere Druckfestigkeit) genutzt werden, da dann ein großer Teil der Betriebs- und Gewichtskräfte von dem metallenen ersten Gehäuse 6 und dem metallenen dritten Gehäuse 62 aufgenommen wird.

### Bezugszeichenliste

- 1: Druckluftversorgungseinrichtung
- 2: Luftrocknereinrichtung
- 4: Lufttrocknerpatrone
- 6: erstes Gehäuse
- 8: Befestigungsvorrichtung
- 10: Anschluss
- 12: Befestigungsvorrichtung
- 14: Anschlussplatte
- 16: Strömungsöffnung
- 18: Strömungsöffnung
- 20: erster Ventilblock
- 22: zweites Gehäuse
- 24: Stehplatte
- 26: Ventileinrichtung
- 28: erste Ventildome
- 30: Ventilsitz
- 32: Ventilkörper
- 34: Druckfedern
- 36: zweiter Ventilblock
- 38: zweite Ventildome
- 40: Formdichtung
- 42: Verschlussteil
- 44: erste Öffnung
- 46: Dichtungsteil
- 48: erste Nuten
- 50: Steg
- 52: Dichtlippe
- 54: Noppen
- 56: zweite Öffnung
- 58: dritte Öffnung
- 60: Steuer- und Regelelektronik
- 62: drittes Gehäuse
- 64: Anschlüsse
- 66: Befestigungsvorrichtung
- 68: Zuganker
- 70: Zwischenplatte
- 72: Ventilsitz

## Patentansprüche

1. Druckluftversorgungseinrichtung (1) für Fahrzeug-Druckluftanlagen, umfassend als Bauteile oder Baugruppen wenigstens eine Lufttrocknereinrichtung (2) mit einer Lufttrocknerpatrone (4), eine Ventileinrichtung (26) mit einem Mehrkreisschutzventil und gegebenenfalls weiteren Ventilen, einen Druckbegrenzer, eine Steuer- und Regelelektronik (60) sowie mehrere Gehäuse oder Gehäusebauteile (6, 20, 22, 36, 62), in welchen die vorgenannten Bauteile oder Baugruppen untergebracht sind, wobei wenigstens ein Gehäuse oder Gehäusebauteil (20, 22, 36, 70) der mehreren Gehäuse oder Gehäusebauteile aus Kunststoff gefertigt ist, **dadurch gekennzeichnet, dass** die Lufttrocknereinrichtung (2) in einem eigenen ersten Gehäuse oder Gehäusebauteil (6) untergebracht ist, welches aus wenigstens einem Metall gefertigt ist, und wobei wenigstens ein Teil der Ventileinrichtung (26) mit dem Mehrkreisschutzventil und den gegebenenfalls weiteren Ventilen in wenigstens einem zweiten Gehäuse oder Gehäusebauteil (22) angeordnet ist, in welchem wenigstens auch die Steuer- und Regelelektronik (60) sowie der Druckbegrenzer untergebracht sind, wobei das wenigstens eine zweite Gehäuse oder Gehäusebauteil (22) aus Kunststoff gefertigt ist, und wobei das wenigstens eine zweite Gehäuse oder Gehäusebauteil (22) zwischen dem ersten Gehäuse (6) und einem dritten Gehäuse oder Gehäusebauteil (62) gehalten ist, welches aus wenigstens einem Metall gefertigt ist, wobei ein Verbund aus dem ersten Gehäuse oder Gehäusebauteil (6), dem wenigstens einen zweiten Gehäuse oder Gehäusebauteil (22) und dem dritten Gehäuse oder Gehäusebauteil (62) ausgebildet wird.

2. Druckluftversorgungseinrichtung nach Anspruch 1, **dadurch gekennzeichnet, dass** an dem ersten Gehäuse oder Gehäusebauteil (6) eine Befestigungsvorrichtung (8) zum Anschluss der Lufttrocknerpatrone (4) angeordnet ist, welche aus einem Metall gefertigt ist.

3. Druckluftversorgungseinrichtung nach Anspruch 1 oder 2, **dadurch gekennzeichnet, dass** an dem ersten Gehäuse oder Gehäusebauteil (6) eine Befestigungsvorrichtung (12) zur Befestigung an dem Fahrzeug angeordnet ist, welche aus Metall besteht.

4. Druckluftversorgungseinrichtung nach einem der vorhergehenden Ansprüche, **dadurch gekennzeichnet, dass** das wenigstens eine zweite Gehäuse oder Gehäusebauteil (22) einen ersten Ventilblock (20) der Ventileinrichtung (26) beinhaltet, mit ersten Ventildomen (28), in welchen mit Ventilsitzen (30, 72) zusammen wirkende Ventilkörper (32) von Sitzventilen beweglich geführt sind, und dass das wenigstens eine zweite Gehäuse oder Gehäusebauteil (22) einen zweiten Ventilblock (36) der Ventileinrichtung (26) beinhaltet, mit zweiten Ventildomen (38), an welchen wenigstens einige der Ventilsitze (30) der Sitzventile der Ventileinrichtung (26) vorzugsweise einstückig ausgebildet sind.

5. Druckluftversorgungseinrichtung nach Anspruch 4, **dadurch gekennzeichnet, dass** die ersten Ventildome (28) und die zweiten Ventildome (38) relativ zueinander derart positioniert sind, dass sie wenigstens teilweise axial ineinander ragen und die einander zugeordneten Ventilsitze (30) und Ventilkörper (32) miteinander fluchten.

6. Druckluftversorgungseinrichtung nach einem der vorhergehenden Ansprüche, **dadurch gekennzeichnet, dass** wenigstens einige der Gehäuse oder Gehäusebauteile (6, 20, 22, 36, 62) Öffnungen (44, 56, 58) oder Strömungskanäle aufweisen, wobei die Öffnungen (44, 56, 58) oder Strömungskanäle aneinander angrenzender Gehäuse oder Gehäusebauteile (6, 20, 22, 36, 62) zum Zustandekommen einer Strömungsverbindung miteinander fluchten.

7. Druckluftversorgungseinrichtung nach Anspruch 6, **dadurch gekennzeichnet, dass** wenigstens einigen der Gehäuse oder Gehäusebauteile (6, 20, 22, 36, 62) wenigstens eine Formdichtung (40) mit wenigstens einem Verschlussteil (42) dichtend zwischengeordnet ist, welches wenigstens eine der Öffnungen (44, 56, 58) oder Strömungskanäle dichtend verschließt.

8. Druckluftversorgungseinrichtung nach Anspruch 7, **dadurch gekennzeichnet, dass** die Formdichtung (40) wenigstens einen vom Verschlussteil (42) abweichenden Dichtungsteil (46) aufweist, welcher in wenigstens einer an der Oberfläche wenigstens eines Gehäuses oder Gehäusebauteils (6, 20, 22, 36, 62) ausgebildeten Nut gelagert ist.

9. Druckluftversorgungseinrichtung nach Anspruch 8, **dadurch gekennzeichnet, dass** der Dichtungsteil (46) an aneinander angrenzenden Gehäusen oder Gehäusebauteilen (6, 20, 22, 36, 62) ausgebildete Öffnungen, Strömungskanäle oder Strömungsnuten gegeneinander und/oder gegenüber der Umgebung abdichtet.

10. Druckluftversorgungseinrichtung nach einem der Ansprüche 7 bis 9, **dadurch gekennzeichnet, dass** die Formdichtung (40) sowie das wenigstens eine Gehäuse oder Gehäusebauteil (6, 20, 22, 36, 62) derart ausgebildet sind, dass abhängig von der Einbau- oder Drehlage derselben Formdichtung (40) eine jeweils andere Öffnung (44, 56, 58) oder ein jeweils anderer Strömungskanal durch das Verschlussteil (42) verschlossen wird.

11. Druckluftversorgungseinrichtung nach einem der vorhergehenden Ansprüche, **dadurch gekennzeichnet, dass** an dem dritten Gehäuse oder Gehäusebauteil (62) eine Befestigungsvorrichtung (66) zur Befestigung an dem Fahrzeug angeordnet ist.

12. Druckluftversorgungseinrichtung nach Anspruch 11, **dadurch gekennzeichnet, dass** das wenigstens eine zweite Gehäuse oder Gehäusebauteil (22) zwischen dem ersten Gehäuse oder Gehäusebauteil (6) und dem dritten Gehäuse oder Gehäusebauteil (62) mittels einerseits in dem ersten Gehäuse oder Gehäusebauteil (6) und andererseits in dem dritten Gehäuse oder Gehäusebauteil (62) gekonterter Zuganker (68) gehalten ist.

13. Druckluftversorgungseinrichtung nach einem der vorhergehenden Ansprüche, **dadurch gekennzeichnet, dass** das dritte Gehäuse oder Gehäusebauteil (62) vorzugsweise plattenförmig ausgebildet ist und an seiner von dem wenigstens einen zweiten Gehäuse oder Gehäusebauteil (22) weg weisenden Außenfläche Anschlüsse (64) für Druckluftkreise von Druckluftverbrauchern aufweist.

14. Druckluftversorgungseinrichtung nach Anspruch 13, **dadurch gekennzeichnet, dass** das wenigstens eine zweite Gehäuse oder Gehäusebauteil (22) eine Zwischenplatte (70) umfasst, welche zwischen dem ersten Ventilblock (20) oder dem zweiten Ventilblock (36) und dem dritten Gehäuse oder Gehäusebauteil (62) angeordnet ist und welche Öffnungen oder Strömungskanäle aufweist, welche Öffnungen oder Strömungskanäle in dem ersten Ventilblock (20) oder in dem zweiten Ventilblock (36) mit Öffnungen oder Strömungskanälen in dem dritten Gehäuse oder Gehäusebauteil (62) miteinander verbindet, welche mit den Anschlüssen (64) für die Druckluftkreise von Druckluftverbrauchern verbunden sind.

15. Fahrzeug-Druckluftanlage oder Fahrzeug-Druckluftverbraucher wie pneumatische oder elektropneumatische Bremseinrichtung, Luftfederungseinrichtung oder Türbetätigungseinrichtung, welche von einer Druckluftversorgungseinrichtung (1) nach wenigstens einem der vorhergehenden Ansprüche druckluftversorgt ist.

16. Fahrzeug beinhaltend eine Fahrzeug-Druckluftanlage nach Anspruch 15.

## Claims

1. Compressed air supply device (1) for vehicle compressed air units, comprising as components or assemblies at least an air drying device (2) with an air drying cartridge (4), a valve device (26) with a multiple circuit protective valve and possibly further valves as well, a pressure limiter, an electronic control and regulation unit (60) and a plurality of housings or housing components (6, 20, 22, 36, 62) in which the aforesaid components or assemblies are accommodated, wherein at least one housing or housing component (20, 22, 36, 70) of the plurality of housings or housing components is made of plastic, **characterised in that** the air drying device (2) is accommodated in a first housing or housing component (6) of its own which is made of at least one metal, and wherein at least part of the valve device (26) with the multiple circuit protective valve and any additional valves is/are arranged in at least one second housing or housing component (22) in which at least the electronic control and regulation unit (60) and the pressure limiter are also accommodated, wherein the at least one second housing or housing component (22) is made of plastic, and wherein the at least one second housing or housing component (22) is held between the first housing (6) and a third housing or housing component (62) which is made of at least one metal, such that a composite is formed of the first housing or housing component (6), the at least one second housing or housing component (22) and the third housing or housing component (62).

2. Compressed air supply device according to Claim 1, **characterised in that** a fastening device (8) made of metal for connecting the air drying cartridge (4) is arranged on the first housing or housing component (6).

3. Compressed air supply device according to Claims 1 or 2, **characterised in that** a fastening device (12) made of metal for connecting to the vehicle is arranged on the first housing or housing component (6).

4. Compressed air supply device according to any of the preceding claims, **characterised in that** the at least one second housing or housing component (22) contains a valve block (20) of the valve device (26), with first valve domes (28) in which valve bodies (32) of seat valves, which co-operate with valve seats (30, 72) are guided and able to move, and the at least one second housing or housing component (22) contains a second valve block (36) of the valve device (26), with second valve domes (38), on which at least some of the valve seats (30) of the seat valves of the valve device (26) are formed, preferably integrally.

5. Compressed air supply device according to Claim 4, **characterised in that** the first and the second valve domes (28, 38) are positioned relative to one another in such manner that they extend axially at least partially into one another and the valve seats (30) and valve bodies (32) associated with one another are aligned with one another.

6. Compressed air supply device according to any of the preceding claims, **characterised in that** at least some of the housings or housing components (6, 20, 22, 36, 62) have openings (44, 56, 58) or flow channels, such that the openings (44, 56, 58) or flow channels of housings or housing components (6, 20, 22, 36, 62) adjacent to one another are aligned with one another in order to form a flow connection.

7. Compressed air supply device according to Claim 6, **characterised in that** at least one shaped seal (40) with at least one closure part (42) is arranged to form a seal between at least some of the housings or housing components (6, 20, 22, 36, 62), which closure part seals off at least one of the said openings (44, 56, 58) or flow channels.

8. Compressed air supply device according to Claim 7, **characterised in that** the shaped seal (40) has at least one sealing part (46) different from the closure part (42), which is fitted into at least one groove formed in the surface of at least one housing or housing component (6, 20, 22, 36, 62).

9. Compressed air supply device according to Claim 8, **characterised in that** the sealing part (46) seals openings, flow channels or flow grooves formed in adjacent housings or housing components (6, 20, 22, 36, 62) from one another and/or from the surroundings.

10. Compressed air supply device according to any of Claims 7 to 9, **characterised in that** the shaped seal (40) and the at least one housing or housing component (6, 20, 220 36, 62) are formed in such manner that depending on the fitted or rotated position of the said shaped seal (40), in each case a different opening (44, 56, 58) or a different flow channel is closed off by the closure part (42).

11. Compressed air supply device according to any of the preceding claims, **characterised in that** a fastening device (66) for fastening onto the vehicle is arranged on the third housing or housing component (62).

12. Compressed air supply device according to Claim 11, **characterised in that** the at least one second housing or housing component (22) is held between the first housing or housing component (6) and the third housing or housing component (62) by means of tie-rods (68) secured on one side to the first housing or housing component (6) and on the other side to the third housing or housing component (62).

13. Compressed air supply device according to any of the preceding claims, **characterised in that** the third housing or housing component (62) is preferably of plate-shaped form and has, on its outer surface facing away from the at least one second housing or housing component (22), connectors (64) for compressed air circuits of compressed air consumers.

14. Compressed air supply device according to Claim 13, **characterised in that** the at least one second housing or housing component (22) has an intermediate plate (70), which is arranged between the first valve block (20) or the second valve block (36) and the third housing or housing component (62), and which connects to one another openings or flow channels in the first valve block (20) or in the second valve block (36) and openings or flow channels in the third housing or housing component (62), which openings or flow channels are connected to the connectors (64) for the compressed air circuits of compressed air consumers.

15. Vehicle compressed air unit or vehicle compressed air consumer such as a pneumatic or electro-pneumatic brake unit, an air suspension unit or a door actuation unit, which is supplied with compressed air by a compressed air supply device (1) according to at least one of the preceding claims.

16. Vehicle containing a vehicle compressed air supply device according to Claim 15.

## Revendications

1. Dispositif (1) d'alimentation en air comprimé pour des systèmes d'air comprimé de véhicule, comprenant, en tant que pièces ou modules, au moins un dispositif (2) de sécheur d'air, ayant une cartouche (4) de sécheur d'air, un dispositif (26) de soupape, ayant une soupape de protection à plusieurs circuits et, le cas échéant, d'autres soupapes, un limiteur de pression, une électronique (60) de commande et de régulation, ainsi que plusieurs boîtiers ou pièces (6, 20, 22, 36, 62) de boîtier, dans lesquels sont logés les pièces ou modules mentionnés ci-dessus, dans lequel au moins un boîtier ou une pièce (20, 22, 36, 70) de boîtier, parmi les plusieurs boîtiers ou pièces de boîtier, est en matière plastique, **caractérisé en ce que** le dispositif (2) de sécheur d'air est logé dans un propre premier boîtier ou pièce (6) de boîtier, qui est en au moins un métal, et dans lequel au moins une partie du dispositif (26) de soupape, ayant la soupape de protection à plusieurs circuits et, le cas échéant, les autres soupapes, est disposé dans au moins un deuxième boîtier ou pièce (22) de boîtier, dans lequel sont logés au également au moins l'électronique (60) de commande et de régulation ainsi que le limiteur de pression, le au moins un deuxième boîtier ou pièce (22) de boîtier étant en matière plastique, et dans lequel le au moins un deuxième boîtier ou pièce (22) de boîtier est maintenu entre le premier boîtier (6) et un troisième boîtier ou pièce (62) de boîtier, qui est en au moins un métal, un combiné du premier boîtier ou pièce (6) de boîtier, du au moins un deuxième boîtier ou pièce (22) de boîtier et du troisième boîtier ou pièce (.62) de boîtier étant constitué.

2. Dispositif d'alimentation en air comprimé suivant la revendication 1, **caractérisé en ce que**, sur le premier boîtier ou pièce (6) de boîtier est monté un système (8) de fixation pour le raccordement de la cartouche (4) de sécheur d'air, le système étant en un métal.

3. Dispositif d'alimentation en air comprimé suivant la revendication 1 ou 2, **caractérisé en ce que**, sur le premier boîtier ou pièce (6) de boîtier, est monté un système (12) de fixation au véhicule, le système étant en un métal.

4. Dispositif d'alimentation en air comprimé suivant l'une des revendications précédentes, **caractérisé en ce que** au moins un deuxième boîtier ou pièce (22) de boîtier comporte un premier bloc (20) de soupape du dispositif (26) de soupape, ayant un premier dôme (28) de soupape, dans lequel des obturateurs (32) de soupape à siège, coopérant avec des sièges (30, 72) de soupape, sont guidés de manière mobile et **en ce que** le au moins une deuxième moitié ou pièce (22) de boîtier comporte un deuxième bloc (36) de soupape du dispositif (26) de soupape, ayant des deuxièmes dômes (38) de soupape, sur lesquels au moins certains des sièges (30) de soupape des soupapes à siège du dispositif (26) de soupape sont constitués, de préférence d'une seule pièce.

5. Dispositif d'alimentation en air comprimé suivant la revendication 4, **caractérisé en ce que** les premiers dômes (28) de soupape et les deuxièmes dômes (38) de soupape sont placés les uns par rapport aux autres, de manière à s'interpénétrer axialement, au moins en partie, et les sièges (30) de soupape et les obturateurs (32), associés les uns aux autres, sont alignés.

6. Dispositif d'alimentation en air comprimé suivant l'une des revendications précédentes, **caractérisé en ce qu'**au moins certains des boîtiers ou pièces (6, 20, 22, 36, 62) de boîtier ont des ouvertures (44, 56, 58) ou des canaux de passage, les ouvertures (44, 56, 58) ou les canaux de passage de boîtiers ou pièces (6, 20, 22, 36, 62) de boîtier voisins étant alignés pour constituer une liaison de communication.

7. Dispositif d'alimentation en air comprimé suivant la revendication 6, **caractérisé en ce qu'**entre au moins certains des boîtiers ou pièces (6, 20, 22, 36, 62) de boîtier est disposé de manière étanche au moins un joint (40) moulé, ayant au moins une partie (42) de fermeture, qui ferme, de manière étanche, au moins l'un des ouvertures (44, 56, 58) ou canaux de passage.

8. Dispositif d'alimentation en air comprimé suivant la revendication 7, **caractérisé en ce que** le joint (40) moulé a au moins une partie (46) d'étanchéité différente de la partie (42) de fermeture, qui est montée dans au moins une rainure constituée à la surface d'au moins un boîtier ou pièces (6, 20, 22, 36, 62) de boîtier.

9. Dispositif d'alimentation en air comprimé suivant la revendication 8, **caractérisé en ce que** la partie (46) d'étanchéité rend étanches entre elles et/ou vis-à-vis de l'atmosphère, des ouvertures, canaux de passage ou rainures de passage, constitués sur des boîtiers ou pièces (6, 20, 22, 36, 62) de boîtier voisins l'un de l'autre.

10. Dispositif d'alimentation en air comprimé suivant l'une des revendications 7 à 9, **caractérisé en ce que** le joint (40) moulé, ainsi que le au moins un boîtier ou pièces (6, 20, 22, 36, 62) de boîtier sont constitués de manière à, en fonction de la position de montage ou en rotation du même joint (40) moulé, fermer une autre ouverture (44, 56, 58) ou un autre canal de passage par la partie (42) de fermeture.

11. Dispositif d'alimentation en air comprimé suivant l'une des revendications précédentes, **caractérisé en ce que**, sur le troisième boîtier ou pièce (62) de boîtier, est monté un système (70) de fixation au véhicule.

12. Dispositif d'alimentation en air comprimé suivant la revendication 11, **caractérisé en ce que** le au moins un deuxième boîtier ou pièce (22) de boîtier est maintenu entre le premier boîtier ou pièce (6) de boîtier et le troisième boîtier ou pièce (62) de boîtier au moyen de tirants (68), opposés d'une part dans le premier boîtier ou pièce (6) de boîtier et d'autre part dans le troisième boîtier ou pièce (62) de boîtier.

13. Dispositif d'alimentation en air comprimé suivant l'une des revendications précédentes, **caractérisé en ce que** le troisième boîtier ou pièce (62) de boîtier est constitué de préférence sous la forme d'une plaque et a, sur sa surface éloignée du au moins un deuxième boîtier ou pièce (22) de boîtier, de raccords (64) pour des circuits d'air comprimé de consommateurs d'air comprimé.

14. Dispositif d'alimentation en air comprimé suivant la revendication 13, **caractérisé en ce que** le au moins un deuxième boîtier ou pièce (22) de boîtier comprend une plaque (70) intermédiaire, qui est disposée entre le premier bloc (20) de soupape ou le deuxième bloc (36) de soupape et le troisième boîtier ou pièce (62) de boîtier, et qui a des ouvertures ou des canaux de passage, qui mettent en communication entre eux des ouvertures ou des canaux de passage, dans le premier bloc (20) de soupape ou dans le deuxième bloc (36) de soupape, avec des ouvertures ou des canaux de passage dans le troisième boîtier ou pièce (62) de boîtier, lesquels communiquent avec les raccords (64) pour les circuits à air comprimé de consommateurs d'air comprimé.

15. Système d'air comprimé de véhicule ou consommateur d'air comprimé de véhicule, comme un dispositif pneumatique ou électropneumatique de frein, un dispositif de suspension pneumatique ou un dispositif d'actionnement de porte, qui est alimenté en air comprimé par un dispositif (1) d'alimentation en air comprimé suivant au moins l'une des revendications précédentes.

16. Véhicule comportant un système d'air comprimé de véhicule suivant la revendication 15.
